# EUROPÄISCHE PATENTSCHRIFT

(11) **EP 2 864 604 B1**
(45) Veröffentlichungstag und Bekanntmachung des Hinweises auf die Patenterteilung: **07.12.2016**
(21) Anmeldenummer: 13726127.7
(22) Anmeldetag: 17.05.2013
(51) Int. Cl.: F01N 3/28

(54) **KONISCHER WABENKÖRPER MIT SCHRÄG RADIAL NACH AUSSEN VERLAUFENDEN KANÄLEN**
CONICAL HONEYCOMB BODY WITH RADIAL AND OBLIQUE ORIENTATED FLOW CHANELS
CORPS EN NID D'ABEILLES CONIQUE AVEC DES CANAUX EN ORIENTATION RADIALE ET OBLIQUE

(30) Priorität: 01.06.2012 DE 102012104767
(43) Veröffentlichungstag der Anmeldung: 29.04.2015
(73) Patentinhaber: Continental Automotive GmbH, 30165 Hannover (DE)
(72) Erfinder: SCHORN, Christian, 53797 Lohmar (DE); LIMBECK, Sigrid, 53804 Much (DE)
(86) Internationale Anmeldenummer: PCT/EP2013/060269
(87) Internationale Veröffentlichungsnummer: WO 2013/178491

(56) Entgegenhaltungen:
- EP-A2- 0 894 949
- FR-A1- 2 617 903
- FR-A1- 2 622 632

## Beschreibung

Die vorliegende Erfindung betrifft einen aus Lagen gewickelten und/oder geschichteten Wabenkörper, wie er insbesondere bei der Gasreinigung eingesetzt wird. Bei Abgasreinigungsanlagen, insbesondere für Verbrennungsmotoren von Kraftfahrzeugen, werden mit katalytisch aktivem Material beschichtete und/oder zur Abscheidung von Partikeln besonders ausgebildete Wabenkörper eingesetzt, wobei oft metallische Materialien für die Wabenkörper eingesetzt werden.

Gerade bei Anwendungen für Kraftfahrzeuge müssen unterschiedliche Rahmenbedingungen beachtet werden. Zum einen ist der vorhandene Platz für den Einbau von Abgasreinigungssystemen beschränkt, zum anderen sollen die Systeme keinen großen Druckverlust im Abgassystem erzeugen, da dies den Wirkungsgrad von Verbrennungsmotoren negativ beeinflusst.

Im Stand der Technik sind bereits zahlreiche Bauformen für gewickelte oder geschichtete Wabenkörper bekannt, darunter Bauformen mit axial in einer Strömungsrichtung verlaufenden Kanälen, Bauformen mit radial von einem inneren Hohlraum nach außen zu einem Sammelraum verlaufenden Kanälen und auch konische Wabenkörper, bei denen von einer Stirnseite zu einer gegenüberliegenden Stirnseite sich im Querschnitt erweiternde Kanäle verlaufen.

Viele unterschiedliche Bauformen sind auch in der EP 0 676 534 A1 beschrieben, unter anderem auch solche mit schräg radial nach außen verlaufenden Kanälen. Auch die DE 102 35 691 A1 beschreibt einen solchen Verlauf von Kanälen.

Aus FR 2 617 903 A1 ist ein Schalldämpfer, aufweisend einen Katalysatorträgerkörper mit radial von innen nach außen verlaufenden Kanälen bekannt.

Aufgabe der vorliegenden Erfindung ist es, einen Wabenkörper der genannten Art so weiterzuentwickeln, dass er leicht, insbesondere in einer Serienproduktion, herstellbar ist und/oder an unterschiedliche Platzverhältnisse beim Einbau anpassbar ist. Auch soll er Bauformen ermöglichen, die relativ große Oberflächen zur Abgasreinigung bei relativ geringem Druckverlust zur Verfügung stellen.

Zur Lösung dieser Aufgabe dient ein Wabenkörper gemäß dem Anspruch 1. Vorteilhafte Ausgestaltungen, die einzeln oder technisch sinnvoll untereinander kombiniert einsetzbar sind, sind in den abhängigen Ansprüchen beschrieben. Die Beschreibung, insbesondere im Zusammenhang mit den Figuren veranschaulicht die Erfindung und führt weitere Ausführungsvarianten der Erfindung an.

Ein aus Lagen gewickelter und/oder geschichteter Wabenkörper hat eine geometrische Mittelachse und einen um die Mittelachse herum rotationssymmetrisch angeordneten Hohlraum sowie eine äußere Mantelfläche, wobei jede Lage (annähernd) konzentrisch um die Mittelachse verläuft, wobei mindestens eine der Lagen zumindest teilweise strukturiert ist, so dass die Lagen eine Vielzahl von für ein Fluid durchströmbaren Kanälen bilden, die von dem Hohlraum in einem nicht rechten Konuswinkel zur Mittelachse nach außen zur äußeren Mantelfläche verlaufen, und wobei die Kanäle einen sich in ihrem Verlauf von innen nach außen ändernden Kanalquerschnitt aufweisen. Weiter wird vorgeschlagen, dass die mindestens eine strukturierte Lage im Wechsel mit mindestens einer Zwischenlage angeordnet ist, wobei beide Lagen wendelförmig aufeinander geschichtet sind.

Dabei laufen die Kanäle nicht genau radial von innen nach außen, also nicht senkrecht bzw. nicht in einem rechten Winkel zur Mittelachse, sondern in einem (anderen) Winkel dazu. Dies verringert den Druckverlust gegenüber genau radial verlaufenden Kanälen, weil die zweimalige Umlenkung des Fluids weniger stark ist. Die einzelnen Lagen haben bei dieser Bauform etwa die Form eines Trichters, wobei hier eine Bauweise in Wendelform besonders in Betracht kommt, so dass die Lagen nicht in sich geschlossen sind, sondern ähnlich einer Wendeltreppe, allerdings mit einem nicht rechten Winkel zur Mittelachse, verlaufen. Diese erfindungsgemäße Bauform bietet vor allem in Kombination mit anderen Bauformen eine zusätzliche Flexibilität bei der Ausnutzung von vorhandenem Bauraum und bei der Verringerung von Druckverlusten.

Um insbesondere auch eine relativ einfache Fertigung zu ermöglichen, ist vorgesehen, dass mindestens eine strukturierte Lage im Wechsel mit mindestens einer Zwischenlage angeordnet ist, wobei beide Lagen wendelförmig aufeinander geschichtet sind. Die Zwischenlage dient im Wesentlichen dazu, den Abstand zwischen den strukturierten Lagen aufrecht zu erhalten, so dass diese nicht mit ihren Strukturen ineinander rutschen können.

Eine wesentliche Problematik bei der Herstellung solcher Wabenkörper besteht darin, die einzelnen Lagen so auszugestalten, dass sie in die gewünschte Wendelform gebracht werden können und die gewünschten Struktureigenschaften haben. Da für solche Wabenkörper typischerweise verwendete Bleche als lange gerade Streifen, aufgewickelt in sogenannten Coils, geliefert werden, ist eine geeignete Umformung erforderlich, wobei diese die durch den Werkstoff gegebenen Grenzen nicht überschreiten darf.

In einem bevorzugten Ausführungsbeispiel sind der Hohlraum und/oder die Mantelfläche zylindrisch ausgestaltet. Schon aus fertigungstechnischen Gründen ist diese Bauform bevorzugt, da alle strukturierten Lagen die gleiche Form aufweisen können.

Weiterhin wird ein Konuswinkel zur Mittelachse von 25° bis 85° vorgeschlagen, bevorzugt 40° bis 70°, wobei für viele Anwendungen ein Winkel von etwa 45° besonders geeignet ist.

In einer weiteren Ausführungsform werden die strukturierten Lagen so geformt, dass die die Kanäle bildende Strukturhöhe der strukturierten Blechlage (im Wesentlichen) konstant ist und die Kanalquerschnittsflächen von innen nach außen zunehmen. Durch die konstante Strukturhöhe bleibt der Verlauf aufeinanderfolgender Lagen in dem Wabenkörper in etwa parallel, was bspw. bei konischen Wabenkörpern mit von einer Stirnseite zur anderen verlaufenden Kanälen zunehmender Querschnittsflächen nicht der Fall ist.

Eine konstante Strukturhöhe lässt sich insbesondere dadurch erreichen, dass die strukturierte Blechlage eine Struktur aufweist, die im Zusammenwirken mit angrenzenden Zwischenlagen Kanäle bildet, deren Berandung durch eine Flankenwellung der strukturierten Blechlage überall (im Wesentlichen) die gleiche Länge hat, aber deren Kanalquerschnittsfläche bei etwa konstanter Strukturhöhe von innen nach außen zunimmt. Dies bedeutet insbesondere, dass die Flankenwellung innen eine ziemlich starke Krümmung aufweist, also in sehr engen Wellungen verläuft, während sie im äußeren Bereich immer weiter auseinandergezogen bzw. erweitert wird, so dass die zugehörige Kanalquerschnittsfläche immer größer wird. Solche Wellformen lassen sich beispielsweise mit bekannten Maschinen zur Wellung von Blechlagen und ein anschließendes Auseinanderziehen einer Seite bzw. ein anschließendes Zusammenstauchen der anderen Seite herstellen.

Sofern man für den gesamten Wabenkörper gleichartige Lagen einsetzt, entsteht erfindungsgemäß eine Form, bei der der Hohlraum gegenüber der Mantelfläche axial versetzt angeordnet ist, so dass der Wabenkörper eine erste konische Stirnseite und eine zweite hohlkonische Stirnseite aufweist. Diese Form ist strömungstechnisch günstig nutzbar und erlaubt insbesondere die Kombination mit anderen Wabenkörpern zur Ausnutzung vorhandener Freiräume.

Da die Herstellung von wendelförmig verlaufenden kontinuierlichen glatten Blechlagen gegebenenfalls eine sehr starke Verformung erfordern würde, wird bei einem Ausführungsbeispiel der Erfindung vorgeschlagen, alle Lagen strukturiert zu gestalten, und zwar abwechselnd strukturierte Blechlagen mit einer groben Struktur und Zwischenlagen mit einer feinen Struktur, wobei die Dimensionen von grober Struktur und feiner Struktur sich um mindestens einen Faktor 3, vorzugsweise um einen Faktor 5 bis 10, unterscheiden. Durch die Verwendung unterschiedlicher Dimensionen bei der Struktur wird erreicht, dass sich durch die grobe Struktur im Wesentlichen die Form der Kanäle ergibt, während die feine Struktur der Zwischenlagen (vorrangig nur) ein Ineinanderrutschen der groben Strukturen verhindert. Auf diese Weise lassen sich daher zwei wendelförmig geformte unterschiedliche strukturierte Lagen zu einem sehr gleichmäßigen Wabenkörper aufeinanderschichten.

Eine weitere Ausführungsform hat die Verwendung von Zwischenlagen mit Schlitzen vorgesehen, die von der äußeren Mantelfläche ausgehend nach innen entlang dem Verlauf der Kanäle ausgebildet sind, vorzugsweise von der äußeren Mantelfläche nach innen verlaufen und außen aufgespreitzt sind. Auf diese Weise entsteht eine innen zusammenhängende Zwischenlage, welche das Ineinanderrutschen der strukturierten Blechlagen verhindern kann, auch wenn die Schlitze nach außen immer weiter geöffnet sind.

Eine andere Option, allerdings mit dem Verlust von Material bei der Produktion verbunden, bietet eine Ausgestaltung der Erfindung, bei der die Zwischenlage mit dreieckigen Ausschnitten versehen ist, die so bemessen sind, dass die Zwischenlage nach Biegen in ihre wendelförmige Endform wieder eine annähernd geschlossene Zwischenlage bildet. Auf diese Weise lässt sich ohne starke Verformung die gewünschte wendelförmige Form der Zwischenlage erreichen und außerdem ein Ineinanderrutschen der strukturierten benachbarten Blechlagen sicher vermeiden.

Eine weitere fertigungstechnische Variante besteht darin, die Zwischenlage entlang von Faltlinien so zu falten, dass sich Überlappungen mit (mindestens) dreifacher Materialstärke bilden und ein (annähernd) wendelförmiger Verlauf der Zwischenlage entsteht. Hierbei sind keine Schneidwerkzeuge erforderlich und es entsteht auch kein Abfall, allerdings kann ein Teil der Flächen durch die Überlappungen nicht mehr für einen Kontakt mit einem hindurchströmenden Fluid genutzt werden. Trotzdem ist diese Bauform für eine kontinuierliche Produktion sehr hilfreich und die entstehenden Überlappungen stellen bei den typischerweise verwendeten dünnen Blechen kein produktionstechnisches Problem dar.

Bei einer anderen Ausführungsform werden als Zwischenlage ein Draht oder mehrere Drähte eingelegt, die wendelförmig zwischen den strukturierten Blechlagen verlaufen, vorzugsweise in in den strukturierten Blechlagen vorgefertigten Einlegenuten. Die Einlegenuten können bei der Formgebung der strukturierten Blechlagen direkt mit erzeugt werden und es genügen im Allgemeinen schon zwei mit Abstand zueinander verlaufende Drähte, um ein Ineinanderrutschen der strukturierten Blechlagen sicher zu vermeiden. Je nach Art der Strukturen kann sogar schon ein Draht ausreichen, bei großen Wabenkörpern sind drei oder mehr Drähte vorteilhaft.

Hier kommen für die strukturierten Blechlagen, bevorzugt für alle in dem Wabenkörper verwendeten Lagen, hochtemperaturkorrosionsbeständige Materialien in Betracht, insbesondere Stähle, die Chrom und/oder Aluminium und/oder Nickel enthalten. Für hohe Temperaturen, insbesondere in Abgasanlagen von Kraftfahrzeugen haben sich solche Materialien bewährt. Sie lassen sich außerdem durch erprobte Löttechniken untereinander verbinden, insbesondere durch Hochtemperaturvakuumlöten. Diese Verbindungstechnik kommt insbesondere auch für die erfindungsgemäßen Wabenkörper an den Berührungsstellen der Lagen zur Anwendung, um den Körper zu stabilisieren.

Bei Wabenkörpern, die für die Abscheidung von Teilchen, insbesondere Rußpartikeln, eingesetzt werden, ist es vorteilhaft, zumindest einen Teil der Lagen aus porösem Material vorzusehen, vorzugsweise aus einem porösen metallischen Material, insbesondere aus Metallfasermaterial und/oder Sintermaterial. Solche Materialien verbessern die Abscheidung von Rußpartikeln und erlauben eine Strömungsführung, bei denen zumindest ein Teil der Strömung innerhalb des porösen Materials verläuft.

Die beschriebenen Wabenkörper werden bevorzugt als Katalysatorträgerkörper eingesetzt, also mit einer katalytisch aktiven Beschichtung versehen, die die Umsetzung von Schadstoffen in einem Abgas fördert.

Die hier beschriebenen Bauformen eines Wabenkörpers erfordert es nicht, dass der Hohlraum an einem Ende geschlossen ist, so dass alles dem Hohlraum zugeführte Abgas durch den Wabenkörper schräg nach außen strömt. Es ist möglich, den Hohlraum an beiden Seiten offen zu gestalten und einen weiteren Wabenkörper, insbesondere einen zylindrischen, axial durchströmbaren Wabenkörper kombiniert mit dem erfindungsgemäßen Wabenkörper anzuordnen, insbesondere in einem gemeinsamen Gehäuse und mit fluchtenden geometrischen Mittelachsen. Auf diese Weise kann ein vorhandener Bauraum besonders gut ausgenutzt werden und es entstehen geringere Druckverluste als bei herkömmlichen Anordnungen. Dieser Vorteil gilt auch für andere Bauformen von Wabenkörpern mit einer geometrischen Mittelachse und einem um die Mittelachse herum rotationssymmetrisch angeordneten Hohlraum sowie einer äußeren Mantelfläche, wobei eine Vielzahl von für ein Fluid durchströmbaren Kanälen vorhanden sind, die von dem Hohlraum in einem nicht rechten Konuswinkel zur Mittelachse nach außen zur äußeren Mantelfläche verlaufen. Solche Wabenkörper, von denen einige auch anhand der Zeichnung noch näher beschrieben werden, können generell vorteilhaft mit einem zylindrischen, axial durchströmbaren Wabenkörper kombiniert werden, insbesondere in einem gemeinsamen Gehäuse und mit fluchtenden geometrischen Mittelachsen. Der Auslass des Hohlraumes eines Wabenkörpers mit schräg nach außen verlaufenden Kanälen bildet dabei eine Art Einlasskonus für einen nachfolgenden zylindrischen Wabenkörper mit parallel zur Mittelachse verlaufenden Kanälen, was geringe Druckverluste beim Übergang zwischen den beiden Wabenkörpern zur Folge hat. Insgesamt lässt sich so eine thermisch und strömungstechnisch vorteilhafte Kombination aus zwei Wabenkörpern bilden.

Bei einer bevorzugten Anwendung ist der beschriebene Wabenkörper bzw. die beschriebene Wabenkörperanordnung Teil eines Abgasbehandlungssystems, vorzugsweise eines Verbrennungsmotors, insbesondere eines Kraftfahrzeugs.

Ausführungsbeispiele und das Umfeld der Erfindung werden im Folgenden anhand der Zeichnung näher beschrieben. Die Erfindung ist nicht auf diese Ausführungsbeispiele beschränkt, jedoch können anhand verschiedener Figuren beschriebene Merkmale in sinnvoller Weise miteinander kombiniert werden. Es sei darauf hingewiesen, dass ein Teil der anhand der Zeichnungen beschriebenen Bauformen und Herstellungsverfahren sich auch für die Serienproduktion von Wabenkörpern mit exakt radial nach außen verlaufenden Kanälen eignet, also mit Kanälen, die senkrecht zu einer geometrischen Mittelachse nach außen verlaufen. Ein Teil der Figuren zeigt zur Veranschaulichung solche Bauformen, obwohl sich die vorliegende Erfindung auf schräg verlaufende Kanäle und im Wesentlichen trichterförmige Lagen bezieht. Die gezeigten Darstellungen enthalten aber ebenso wichtige Konzepte für die Herstellung von exakt radialen Kanälen in Wabenkörpern, die Gegenstand anderer Erfindungen sind. Es zeigen:
- Fig. 1:: schematisch eine perspektivische Ansicht eines Wabenkörpers mit schräg von innen nach außen verlaufenden Kanälen,
- Fig. 2:: einen Längsschnitt durch die geometrische Mittelachse von Fig. 1,
- Fig. 3:: eine strukturierte Blechlage,
- Fig. 4:: ein erstes Ausführungsbeispiel für Kanalformen der strukturierten Blechlage,
- Fig. 5, 6, 7, 8:: eine Veranschaulichung weiterer Ausführungsbeispiele für Kanalformen der strukturierten Blechlage,
- Fig. 9:: einen Ausschnitt aus einer wendelförmigen strukturierten Blechlage,
- Fig. 10:: die Blechlage nach Fig. 9 mit einer Zwischenlage,
- Fig. 11:: einen Teilbereich eines Wabenkörpers aus strukturierter Blechlage und glatter Zwischenlage,
- Fig. 12:: schematisch den Herstellungsprozess eines Wabenkörpers unter Verwendung von Drähten als Zwischenlage,
- Fig. 13:: schematisch die bei dem Herstellungsprozess gemäß Fig. 12 entstehenden Formen des die Zwischenlage bildenden Drahts,
- Fig. 14:: eine ausgeschnittene glatte Zwischenlage mit dreieckigen Ausschnitten,
- Fig. 15:: schematisch den Aufbau eines Wabenkörpers mit ausgeschnittener glatter Zwischenlage,
- Fig. 16:: die Endform der ausgeschnittenen glatten Zwischenlage nach dem Einbau,
- Fig. 17:: eine geschlitzte glatte Zwischenlage in ihrer Endform,
- Fig. 18:: eine gefaltete glatte Zwischenlage, teilweise in ihrer Endform, und
- Fig. 19:: eine kombinierte Anordnung von einem Wabenkörper mit einem zylindrischen Wabenkörper.

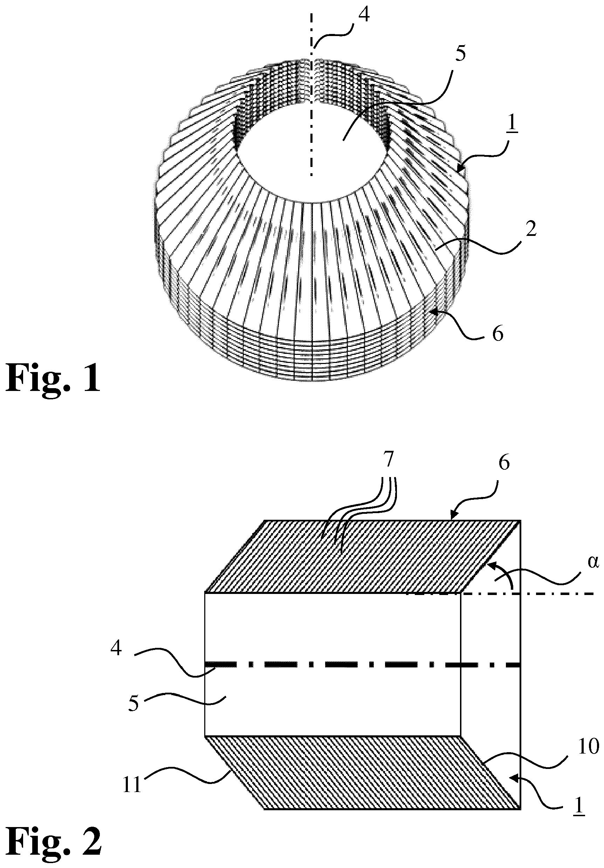

Fig. 1 zeigt schematisch den grundsätzlichen Aufbau eines Ausführungsbeispiels eines erfindungsgemäßen Wabenkörpers 1 mit strukturierten Blechlagen 2 als wichtiger Bestandteil, die sich etwa konzentrisch um eine geometrische Mittelachse 4 erstrecken und einzeln jeweils etwa die Form eines Trichters haben. Im Inneren des Wabenkörpers befindet sich ein zylindrischer Hohlraum 5. Außen werden die strukturierten Blechlagen 2 von einer äußeren Mantelfläche 6 begrenzt.

Fig. 2 zeigt einen schematischen Längsschnitt durch die geometrische Mittelachse 4 der Fig. 1. Dabei wird erkennbar, dass von dem Hohlraum 5 zahlreiche Kanäle 7 schräg nach außen führen, und zwar mit einem Konuswinkel α gegenüber der Richtung der geometrischen Mittelachse 4, wobei alle Kanäle an der äußeren Mantelfläche 6 enden. Auf diese Weise bildet sich eine konische Stirnseite 11 und eine hohlkonische Stirnseite 10.

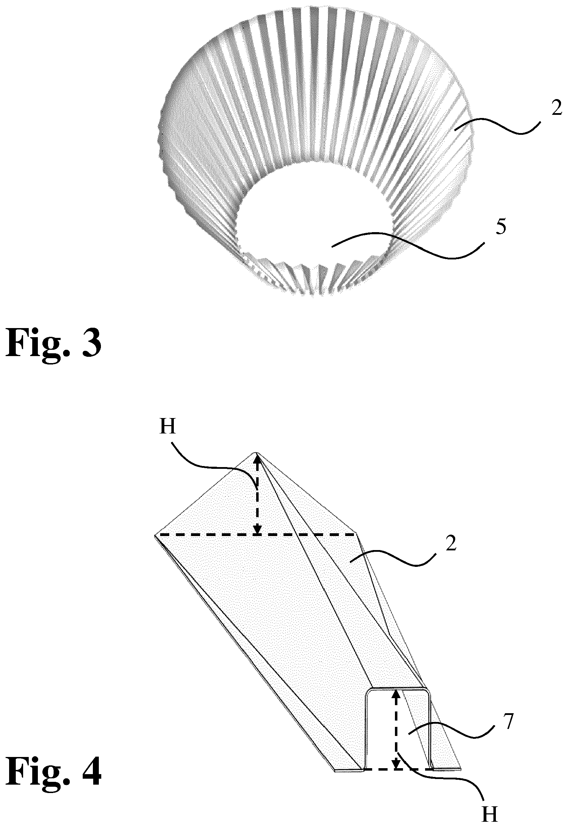

Fig. 3 zeigt nochmals in schematischer Darstellung perspektivisch eine einzelne strukturierte Blechlage 2, die sich trichterförmig um den Hohlraum 5 erstreckt. Zu erkennen ist dabei auch die in diesem Ausführungsbeispiel gewählte besondere Kanalform, die in Fig. 4 genauer gezeigt ist.

Fig. 4 veranschaulicht das generelle geometrische Problem, aus im Wesentlichen ebenen Blechstreifen Strukturen zu formen, die über die gesamte Breite des Blechstreifens die gleiche Strukturhöhe H aufweisen, jedoch trotz Verwendung der gleichen Menge an Material als Berandung an einem Ende einen kleineren Querschnitt als am anderen Ende aufweisen, wodurch die gewünschte Trichterform der strukturierten Blechlage 2 herstellbar wird. Die entstehenden Kanäle 7 der strukturierten Blechlage 2 weisen eine nach außen zunehmende Kanalquerschnittsfläche 7i, 7a auf.

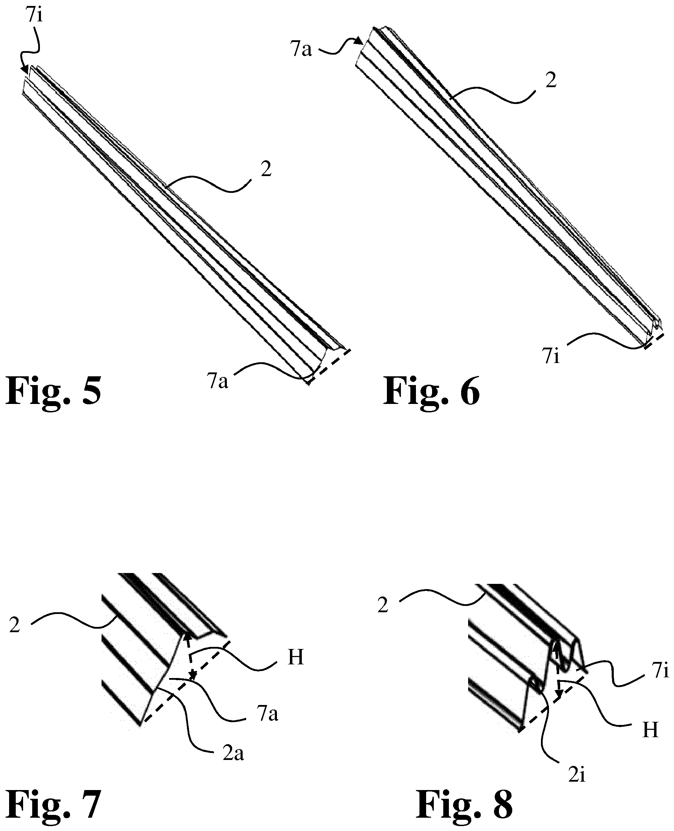

Die Fig. 5, 6, 7 und 8 zeigen ein anderes erfindungsgemäßes Ausführungsbeispiel für Strukturen, die bei gleicher Länge der Berandung eines Querschnitts unterschiedliche Kanalquerschnittsflächen über ihren Verlauf aufweisen. Die Fig. 5 und 6 zeigen jeweils den gleichen Teil einer strukturierten Blechlage 2, jedoch aus verschiedenen Blickrichtungen. Die Fig. 7 und 8 zeigen vergrößert die beiden Enden der in den Fig. 5 und 6 gezeigten Strukturen. Dabei weist die strukturierte Blechlage 2 Kanäle auf, die eine kleinere innere Kanalquerschnittsfläche 7i und eine größere äußere Kanalquerschnittsfläche 7a haben. Dies wird erreicht durch eine Flankenwellung, die als innere Flankenwellung 2i relativ eng aneinander verlaufende Wellenberge und Wellentäler aufweist, während die äußere Flankenwellung 2a weit auseinander gezogen ist, so dass die Wellentäler und Wellenberge nahezu flach verlaufen. Die Strukturhöhe H der strukturierten Blechlage 2 ist jedoch an beiden Enden der Kanäle gleich hoch.

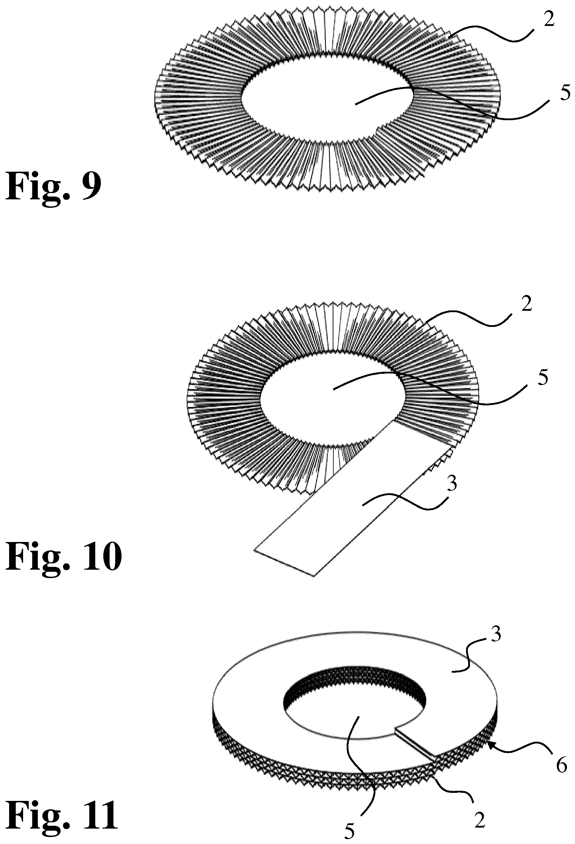

In den folgenden Figuren sind der Einfachheit halber keine trichterförmigen, konischen Lagen dargestellt, sondern flache Strukturen, an denen sich die Einzelheiten der Erfindung leichter veranschaulichen lassen. Entsprechend der vorliegenden Erfindung sollen diese Lagen jedoch zusätzlich zu den dargestellten und beschriebenen Eigenschaften auch noch trichterförmig sein, wie dies in den Fig. 1 und 3 veranschaulicht wird. Es sei allerdings darauf hingewiesen, dass die in den Fig. 9-18 beschriebenen Ausführungsformen und Herstellungsmethoden sich grundsätzlich auch für die Herstellung von Wabenkörpern mit rein radial verlaufenden Kanälen eignen, wie sich unmittelbar aus den Darstellungen ergibt.

Die Fig. 9, 10 und 11 veranschaulichen, wie eine strukturierte Blechlage 2 mittels einer glatten Zwischenlage 3 zu einem wendelförmigen Gebilde aufgewickelt bzw. geschichtet werden kann, wobei die Zwischenlage 3 verhindert, dass die Strukturen der strukturierten Blechlage 2 beim Aufeinanderschichten ineinander rutschen. Dabei veranschaulicht Fig. 11 einen Teilbereich eines so entstehenden

Wabenkörpers mit einem Hohlraum 5 und einer äußeren Mantelfläche 6, wobei die wendelförmige Anordnung der strukturierten Blechlage 2 und der Zwischenlage 3 zu erkennen ist. In der Darstellung fehlt nur die zusätzliche trichterförmige Ausgestaltung, die erfindungsgemäß vorhanden sein soll, jedoch zur besseren Veranschaulichung geglättet dargestellt wurde.

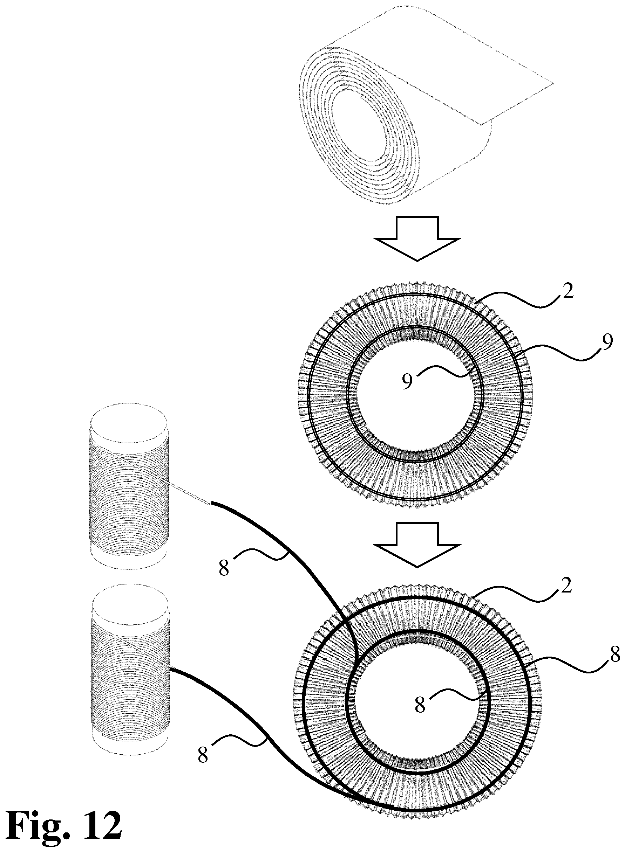

Fig. 12 veranschaulicht ein anderes Ausführungsbeispiel der Erfindung, bei dem die Zwischenlage durch zwei Drähte 8 gebildet wird, die vorzugsweise einen Dicke von 0,1 bis 1 mm aufweisen. Wie schematisch angedeutet, entsteht aus einem glatten, meist zu einem sogenannten Coil gewickelten Blechband durch geeignete Wellung eine wendelförmige strukturierte Blechlage 2, wobei beim Strukturieren im inneren und äußeren Bereich Einlegenuten 9 vorgesehen werden können. In diese Einlegenuten 9 wird beim wendelförmigen Schichten jeweils ein Draht 8 von einer schematisch angedeuteten Vorratsrolle eingelegt, so dass die beiden Drähte 8 eine Zwischenlage bilden, sofern die Einlegenut 9 nicht tiefer als die Dicke der Drähte 8 ist. In diesem Falle bewirken die Drähte 8, die im Verhältnis zur Strukturhöhe H der strukturierten Blechlage 2 dünn sein müssen, dass die aufeinandergeschichteten strukturierten Blechlagen nicht ineinander rutschen können. Diese Bauform hat den zusätzlichen Vorteil, dass sich größere Kanalquerschnitte bilden, weil die Kanäle nicht durch eine durchgehende Zwischenlage begrenzt werden.

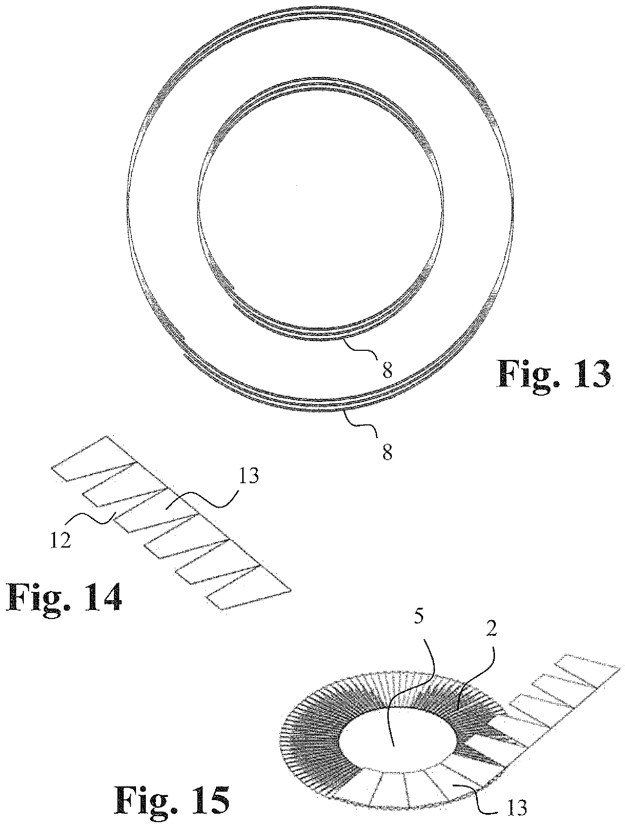

Fig. 13 veranschaulicht nochmals die sich bei dem Herstellungsprozess gemäß Fig. 12 bildenden Formen der Drähte 8, die ihrerseits im fertigen Wabenkörper wendelförmig verlaufen.

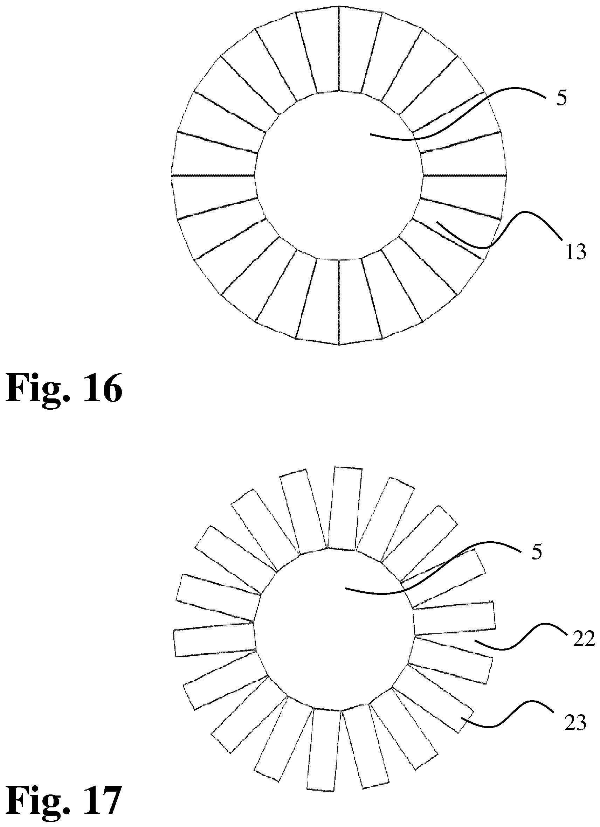

Fig. 14 veranschaulicht eine andere erfindungsgemäße ausgeschnittene glatte Zwischenlage 13, in welcher etwa dreieckige Ausschnitte 12 vorgesehen sind, so dass eine Verformung zu einer wendelförmigen Zwischenlage leicht möglich ist. Dies veranschaulicht die Fig. 15, bei der die ausgeschnittene glatte Zwischenlage 13 teilweise schon in ihre Endform gebracht ist. Man erkennt, dass die dreieckigen Ausschnitte 12 gerade so bemessen sind, dass sich im fertigen Zustand eine praktisch geschlossene Zwischenlage 13 ergibt, die wiederum das Ineinanderrutschen von Strukturen der strukturierten Blechlage 2 vollständig verhindert. Bei dieser Herstellungsweise entstehen allerdings Materialabfälle in Form der dreieckigen Ausschnitte 12. Dafür bildet sich jedoch, wie Fig. 16 nochmals veranschaulicht, eine praktisch geschlossene wendelförmige ausgeschnittene glatte Zwischenlage 13, deren einzelne Segmente außen zusammenhängen und innen den Hohlraum 5 freilassen.

Eine alternative Ausführungsform zeigt Fig. 17, bei der eine geschlitzte glatte Zwischenlage 23 dargestellt ist. Hier verlaufen Schlitze von einem zusammenhängenden, den Hohlraum 5 umgebenden Bereich nach außen, so dass kein Abfallmaterial entsteht, jedoch dreieckige, sich von innen nach außen öffnende Schlitze vorhanden sind. Trotzdem kann eine solche geschlitzte glatte Zwischenlage 23 das Ineinanderrutschen von Strukturen benachbarter strukturierter Blechlagen weitgehend verhindern.

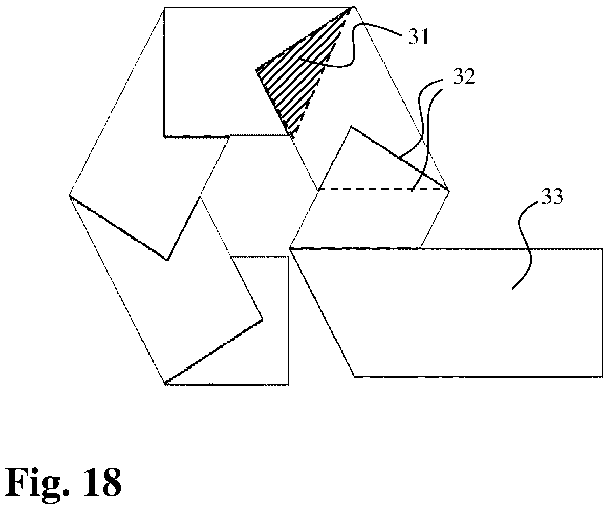

Eine weitere Form einer gefalteten glatten Zwischenlage 33 ist in Fig. 18 veranschaulicht. Da in Wabenkörpern typischerweise Blechlagen mit einer Dicke von 20 µm bis 120 µm eingesetzt werden, spielt es für die Endform keine große Rolle, wenn in einzelnen Bereichen Blechlagen überlappen. Dies macht sich die Ausführungsform gemäß Fig. 18 zunutze, in der die Zwischenlage 33 entlang der Faltlinien 32 gefaltet ist, wodurch im Überlappungsbereich etwa in Form von Dreiecken entstehen. Auf diese Weise lässt sich, je nach Anzahl der Faltlinien 32, sehr gut die gewünschte Form einer Zwischenlage aus einem glatten Blechstreifen in Wendelform bzw. in Wendelform und Trichterform herstellen.

Eine Serienproduktion von erfindungsgemäßen Wabenkörpern aus Blechstreifen durch wendeiförmiges Schichten von strukturierten Blechlagen 2 und Zwischenlagen 3 ist daher möglich.

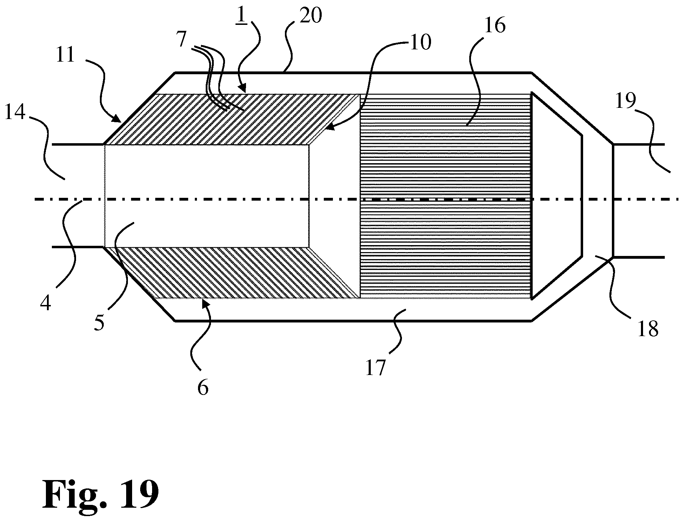

Fig. 19 veranschaulicht, wie ein erfindungsgemäßer Wabenkörper 1 mit einem herkömmlichen zylindrischen Wabenkörper 16 in einem gemeinsamen Gehäuse 20 angeordnet werden kann. Von einem Einlass 14 kann ein zu reinigendes Fluid, insbesondere Abgas eines Verbrennungsmotors, in den Hohlraum 5 des erfindungsgemäßen konischen Wabenkörpers 1 strömen, wobei ein Teil des Fluids durch Kanäle 7 der äußeren Mantelfläche 6 gelangt. Dieser Teil des Fluids wird in einem Sammelraum 17 gesammelt, außen um den zylindrischen Wabenkörper 16 herumgeführt und gelangt dann in einen Mischraum 18 und zu einem Auslass 19. Ein anderer Teil des Fluids strömt von dem Hohlraum 5 in den zylindrischen Wabenkörper 16, der nicht weiter dargestellte axiale Kanäle enthält, so dass auch dieser Teil des Fluids in den Mischraum 18 und zum Auslass 19 gelangt. Besonders vorteilhaft ist es, wenn der konische Wabenkörper 1 und der zylindrische Wabenkörper 16 entlang einer gemeinsamen geometrischen Mittelachse 4 fluchtend angeordnet sind. Diese Ausführungsform ist ein Beispiel für Anwendungsmöglichkeiten von konischen Wabenkörpern zur günstigen Ausnutzung von vorhandenem Bauraum und zur Verringerung von Druckverlusten bei Bereitstellung einer vorgegebenen Oberfläche zur katalytischen Umsetzung oder Abscheidung von Partikeln.

Die Erfindung ermöglicht insgesamt eine flexible und an verschiedene Einbausituationen angepasste Verwendung von konischen Wabenkörpern allein oder in Verbindung mit anderen Wabenkörpern zur Behandlung von Fluiden, insbesondere zur Reinigung von Abgasen bei Verbrennungsmotoren, insbesondere in Kraftfahrzeugen.

### Bezugszeichenliste

- 1: konischer Wabenkörper
- 2: strukturierte Blechlage
- 2i: innere Flankenwellung
- 2a: äußere Flankenwellung
- 3: Zwischenlage
- 4: geometrische Mittelachse
- 5: Hohlraum
- 6: äußere Mantelfläche
- 7: Kanäle
- 7i: innere Kanalquerschnittsfläche
- 7a: äußere Kanalquerschnittsfläche
- 8: Draht
- 9: Einlegenut
- 10: hohlkonische Stirnseite
- 11: konische Stirnseite
- 12: dreieckiger Ausschnitt
- 13: ausgeschnittene glatte Zwischenlage
- 14: Einlass
- 16: zylindrischer Wabenkörper
- 17: Sammelraum
- 18: Mischraum
- 19: Auslass
- 20: Gehäuse
- 22: Schlitz
- 23: geschlitzte glatte Zwischenlage
- 31: Überlappung
- 32: Faltlinie
- 33: gefaltete glatte Zwischenlage

- H: Strukturhöhe
- α: Konuswinkel

## Patentansprüche

1. Aus Lagen (2, 3) gewickelter oder geschichteter Wabenkörper (1) mit einer geometrischen Mittelachse (4) und einem um die Mittelachse (4) herum rotationssymmetrisch angeordneten Hohlraum (5) sowie einer äußeren Mantelfläche (6), wobei jede Lage (2, 3) konzentrisch um die Mittelachse (4) verläuft, wobei mindestens eine der Lagen (2) zumindest teilweise strukturiert ist, so dass die Lagen (2, 3) eine Vielzahl von für ein Fluid durchströmbaren Kanälen (7) bilden, die von dem Hohlraum (5) in einem nicht rechten Konuswinkel (α) zur Mittelachse (4) nach außen zur äußeren Mantelfläche (6) verlaufen, wobei weiter die Kanäle (7) einen sich in ihrem Verlauf von innen nach außen ändernden Kanalquerschnitt (7i, 7a) aufweisen und mindestens eine strukturierte Lage (2) im Wechsel mit mindestens einer Zwischenlage (3; 8; 13; 23; 33) angeordnet ist, **dadurch gekennzeichnet, dass** beide Lagen wendelförmig aufeinander geschichtet sind.

2. Wabenkörper (1) nach Anspruch 1, **dadurch gekennzeichnet, dass** zumindest der Hohlraum (5) oder die Mantelfläche (6) zylindrisch ist.

3. Wabenkörper (1) nach Anspruch 1 oder 2, **dadurch gekennzeichnet, dass** der Konuswinkel (α) zur Mittelachse (4) 25° bis 85° beträgt.

4. Wabenkörper (1) nach einem der vorhergehenden Ansprüche, **dadurch gekennzeichnet, dass** die die Kanäle (7) bildende Strukturhöhe (H) der strukturierten Blechlage (2) konstant ist und die Kanalquerschnittsflächen (7i, 7a) von innen nach außen zunehmen.

5. Wabenkörper (1) nach einem der vorhergehenden Ansprüche, **dadurch gekennzeichnet, dass** die strukturierte Blechlage (2) eine Struktur aufweist, die im Zusammenwirken mit angrenzenden Zwischenlagen (3) Kanäle (7) bildet, deren Berandung durch eine Flankenwellung (2i, 2a) der strukturierten Blechlage (2) überall die gleiche Länge hat, aber deren Kanalquerschnittsfläche (7i, 7a) bei etwa konstanter Strukturhöhe (H) von innen nach außen zunimmt.

6. Wabenkörper (1) nach einem der vorhergehenden Ansprüche, **dadurch gekennzeichnet, dass** der Hohlraum (5) gegenüber der Mantelfläche (6) axial versetzt angeordnet ist, so dass der Wabenkörper eine erste konische Stirnseite (11) und eine zweite hohlkonische Stirnseite (10) aufweist.

7. Wabenkörper (1) nach einem der vorhergehenden Ansprüche, **dadurch gekennzeichnet, dass** alle Lagen (2, 3) strukturiert sind, und zwar abwechselnd strukturierte Blechlagen (2) mit einer groben Struktur und Zwischenlagen (3) mit einer feinen Struktur, wobei die Dimensionen von grober und feiner Struktur sich um mindestens einen Faktor 3 unterscheiden.

8. Wabenkörper (1) nach einem der Ansprüche 1 bis 6, **dadurch gekennzeichnet, dass** die Zwischenlage (23) mit Schlitzen (22) versehen ist, welche von der äußeren Mantelfläche (6) ausgehend nach innen entlang dem Verlauf der Kanäle (7) ausgebildet sind.

9. Wabenkörper (1) nach einem der Ansprüche 1 bis 6, **dadurch gekennzeichnet, dass** die Zwischenlage (13) mit dreieckigen Ausschnitten (12) versehen ist, die so bemessen sind, dass die Zwischenlage nach Biegen in ihre wendelförmige Endform wieder eine geschlossene Zwischenlage bildet.

10. Wabenkörper (1) nach einem der Ansprüche 1 bis 6, **dadurch gekennzeichnet, dass** die Zwischenlage (33) entlang von Faltlinien (32) so gefaltet ist, dass sich Überlappungen (31) mit dreifacher Materialstärke bilden und ein wendelförmiger Verlauf der Zwischenlage (33) vorliegt.

11. Wabenkörper (1) nach einem der Ansprüche 1 bis 6, **dadurch gekennzeichnet, dass** die Zwischenlage von mindestens einem Draht (8) gebildet ist, der wendelförmig zwischen den strukturierten Blechlagen (2) verläuft.

12. Wabenkörper (1) nach einem der vorhergehenden Ansprüche, **dadurch gekennzeichnet, dass** dieser kombiniert mit einem zylindrischen, axial durchströmbaren Wabenkörper (16) angeordnet ist, insbesondere in einem gemeinsamen Gehäuse (20) und mit fluchtenden geometrischen Mittelachsen.

## Claims

1. Honeycomb body (1) which is wound or layered from plies (2, 3) and which has a geometric central axis (4) and a cavity (5) arranged rotationally symmetrically around the central axis (4) and an outer lateral surface (6), wherein each ply (2, 3) runs concentrically around the central axis (4), wherein at least one of the plies (2) is at least partially structured such that the plies (2, 3) form a multiplicity of channels (7) through which a fluid can flow and which run outward from the cavity (5) to the outer lateral surface (6) with a non-perpendicular cone angle (α) with respect to the central axis (4), wherein furthermore, the channels (7) have a channel cross section (7i, 7a) which varies over the course of said channels from the inside to the outside, and at least one structured ply (2) is arranged in alternation with at least one intermediate ply (3; 8; 13; 23; 33), **characterized in that** the two plies are layered one on top of the other in helical fashion.

2. Honeycomb body (1) according to Claim 1, **characterized in that** at least the cavity (5) or the lateral surface (6) is cylindrical.

3. Honeycomb body (1) according to Claim 1 or 2, **characterized in that** the cone angle (α) with respect to the central axis (4) is 25° to 85°.

4. Honeycomb body (1) according to one of the preceding claims, **characterized in that** the structure height (H), which forms the channels (7), of the structured sheet-metal ply (2) is constant and the channel cross-sectional areas (7i, 7a) increase from the inside to the outside.

5. Honeycomb body (1) according to one of the preceding claims, **characterized in that** in the structured sheet-metal ply (2) has a structure which, in interaction with adjacent intermediate plies (3), forms channels (7) whose perimeter formed by a flank corrugation (2i, 2a) of the structured sheet-metal ply (2) has the same length at all locations but whose channel cross-sectional area (7i, 7a) increases from the inside to the outside with an approximately constant structure height (H).

6. Honeycomb body (1) according to one of the preceding claims, **characterized in that** the cavity (5) is arranged so as to be axially offset with respect to the lateral surface (6), such that the honeycomb body has a first, conical face side (11) and a second, hollow conical face side (10).

7. Honeycomb body (1) according to one of the preceding claims, **characterized in that** all of the plies (2, 3) are structured, specifically with structured sheet-metal plies (2) with a coarse structure and intermediate plies (3) with a fine structure in alternation, wherein the dimensions of the coarse and fine structures differ by at least a factor of 3.

8. Honeycomb body (1) according to one of Claims 1 to 6, **characterized in that** the intermediate ply (23) is provided with slots (22) which are formed so as to extend inward from the outer lateral surface (6) along the profile of the channels (7).

9. Honeycomb body (1) according to one of Claims 1 to 6, **characterized in that** the intermediate ply (13) is provided with triangular cutouts (12) which are dimensioned such that the intermediate ply, after being bent into its helical final shape, forms a closed intermediate ply again.

10. Honeycomb body (1) according to one of Claims 1 to 6, **characterized in that** the intermediate ply (33) is folded along fold lines (32) such that overlaps (31) with threefold material thickness are generated and a helical profile of the intermediate ply (33) is realized.

11. Honeycomb body (1) according to one of Claims 1 to 6, **characterized in that** the intermediate ply is formed by at least one wire (8) which runs in helical fashion between the structured sheet-metal plies (2).

12. Honeycomb body (1) according to one of the preceding claims, **characterized in that** said honeycomb body is arranged in combination with a cylindrical honeycomb body (16) through which flow can pass axially, in particular in a common housing (20) and with aligned geometric central axes.

## Revendications

1. Corps (1) en nid d'abeilles constitué de couches (2, 3) enroulées ou stratifiées et présentant un axe géométrique central (4), une cavité (5) disposée symétriquement en rotation autour de l'axe central (4) ainsi qu'une surface d'enveloppe extérieure (6),
chaque couche (2, 3) s'étendant concentriquement autour de l'axe central (4),
au moins l'une des couches (2) étant au moins en partie structurée de telle sorte que les couches (2, 3) forment plusieurs canaux (7) qui peuvent être traversés par un fluide et qui s'étendent depuis la cavité (5) vers l'extérieur en direction de la surface d'enveloppe extérieure (6) en suivant un angle de cône (α) non droit par rapport à l'axe central (4),
les canaux (7) présentant dans une section transversale (7i, 7a) de canal qui varie dans leur extension de l'intérieur vers l'extérieur et
au moins une couche structurée (2) étant disposée en alternance avec au moins une couche intermédiaire (3; 8; 13; 23; 33),
**caractérisé en ce que**
les deux couches sont stratifiées l'une sur l'autre en forme de spirale.

2. Corps (1) en nid d'abeilles selon la revendication 1, **caractérisé en ce que** la cavité (5) et/ou la surface d'enveloppe (6) sont cylindriques.

3. Corps (1) en nid d'abeilles selon les revendications 1 ou 2, **caractérisé en ce que** l'angle de cône (α) par rapport à l'axe central (4) est compris entre 25° et 85°.

4. Corps (1) en nid d'abeilles selon l'une des revendications précédentes, **caractérisé en ce que** la hauteur de structuration (H) de la couche (2) en tôle structurée qui forme les canaux (7) est constante et **en ce que** la superficie de la section transversale (7i, 7a) des canaux augmente de l'intérieur vers l'extérieur.

5. Corps (1) en nid d'abeilles selon l'une des revendications précédentes, **caractérisé en ce que** la couche (2) en tôle structurée présente une structure qui forme, en coopération avec des couches intermédiaires (3) adjacentes, des canaux (7) dont le bord a partout la même longueur grâce à une ondulation de flanc (2i, 2a) de la couche (2) de tôle structurée mais dont la superficie (7i, 7a) de la section transversale augmente de l'intérieur vers l'extérieur pour une hauteur de structure (H) sensiblement constante.

6. Corps (1) en nid d'abeilles selon l'une des revendications précédentes, **caractérisé en ce que** la cavité (5) est décalée axialement par rapport à la surface d'enveloppe (6) de telle sorte que le corps en nid d'abeilles présente un premier côté frontal conique (11) et un deuxième côté frontale conique creux (10).

7. Corps (1) en nid d'abeilles selon l'une des revendications précédentes, **caractérisé en ce que** toutes les couches (2, 3) sont structurées, des couches (2) de tôle structurée à structure grossière et des couches intermédiaires (3) à structure fine étant alternées, les dimensions de la structure grossière et de la structure fine différant les unes des autres d'au moins un facteur 3.

8. Corps (1) en nid d'abeilles selon l'une des revendications 1 à 6, **caractérisé en ce que** la couche intermédiaire (23) est dotée de fentes (22) qui sont formées de manière continue entre la surface d'enveloppe extérieure (6) et l'intérieur en suivant l'extension des canaux (7).

9. Corps (1) en nid d'abeilles selon l'une des revendications 1 à 6, **caractérisé en ce que** la couche intermédiaire (13) est dotée de découpes triangulaires (12) dimensionnées de telle sorte que la couche intermédiaire forme de nouveau une couche intermédiaire fermée après avoir été courbée dans sa forme enroulée finale.

10. Corps (1) en nid d'abeilles selon l'une des revendications 1 à 6, **caractérisé en ce que** la couche intermédiaire (33) est repliée le long de lignes de pliage (32) de telle sorte que des superpositions (31) d'une épaisseur triple soient formées et que la couche intermédiaire (33) s'étende en spirale.

11. Corps (1) en nid d'abeilles selon l'une des revendications 1 à 6, **caractérisé en ce que** la couche intermédiaire est formée d'au moins un fil (8) qui s'étend en spirale entre les couches (2) de tôle structurée.

12. Corps (1) en nid d'abeilles selon l'une des revendications précédentes, **caractérisé en ce qu'**il est combiné avec un corps (16) en nid d'abeilles cylindrique et traversé axialement, en particulier dans un boîtier (20) commun, avec leurs axes géométriques centraux alignés l'un sur l'autre.
